# EUROPÄISCHE PATENTSCHRIFT

(11) **EP 4 252 113 B1**
(45) Veröffentlichungstag und Bekanntmachung des Hinweises auf die Patenterteilung: **08.07.2026**
(21) Anmeldenummer: 21820531.8
(22) Anmeldetag: 26.11.2021
(51) Int. Cl.: G06F 13/38, G01B 7/06

(54) **MESSSONDE, INSBESONDERE ZUR TAKTILEN MESSUNG AUF EINER OBERFLÄCHE VON GEGENSTÄNDEN**
MEASURING PROBE, IN PARTICULAR FOR THE TACTILE MEASUREMENT ON A SURFACE OF OBJECTS
SONDE DE MESURE, EN PARTICULIER POUR LA MESURE TACTILE SUR UNE SURFACE D'OBJETS

(30) Priorität: 27.11.2020 DE 102020131476
(43) Veröffentlichungstag der Anmeldung: 04.10.2023
(73) Patentinhaber: Helmut Fischer GmbH Institut für Elektronik und Messtechnik, 71069 Sindelfingen (DE)
(72) Erfinder: AKRA, Bilal, 71292 Friolzheim (DE)
(74) Vertreter: Mammel und Maser Patentanwälte PartG mbB
(86) Internationale Anmeldenummer: PCT/EP2021/083087
(87) Internationale Veröffentlichungsnummer: WO 2022/112464

(56) Entgegenhaltungen:
- EP-A2- 2 386 822
- CN-A- 101 937 414
- CN-U- 202 694 335
- US-A1- 2016 188 514
- MAXIM: "USB 2.0 Full-Speed Transceiver with UART Multiplexing Mode", INTERNET CITATION, 1 March 2006 (2006-03-01), XP002432696, Retrieved from the Internet <URL:http://datasheets.maxim-ic.com/en/ds/MAX3349E.pdf> [retrieved on 20070509]

## Beschreibung

Die Erfindung betrifft eine Messsonde, insbesondere zur taktilen Messung auf einer Oberfläche von Gegenständen.

Messsonden werden heute vielfach eingesetzt, um mittels spezifischer Sensoranordnungen physikalische Parameter, beispielsweise Schichtdicken, während eines Fertigungsprozesses oder im Anschluss daran, zu prüfen. Zur detaillierten Datenauswertung und/oder zur Ausgabe der erfassten Messwerte müssen die Messdaten typischerweise mittels eines Kommunikationsprotokolls von der Messsonde auf Datenverarbeitungseinrichtungen übermittelt werden. Wird ein einzelner Kommunikationsstandard bereitgestellt, sind die Übertragungsmöglichkeiten begrenzt.

Demzufolge sind auch die Anwendungsmöglichkeiten einer solchen Messsonde begrenzt. Beispielsweise weisen mobile Geräte, die genutzt werden, um die Messdaten im Feld auszulesen, oftmals andere Kommunikationsprotokolle auf, als Geräte, die in einer Fertigungsumgebung verwendet werden. Zudem ist bei mobilen Datenverarbeitungseinrichtungen ein Akkumulatorbetrieb aufgrund der hohen Leistungsaufnahme reduziert.

Aus der DE 10 2011 103 123 A1 ist eine Messsonde bekannt, bei der Messdaten mittels einer festen Verbindungsleitung übertragen werden können. Diese fest verbaute Verbindungsleitung führt zu Datenverarbeitungseinrichtungen, welche nicht flexibel einsetzbar sind.

Aus der EP 2 386 822 A2 ist eine Messsonde für taktile Messungen auf einer Oberfläche von Gegenständen bekannt. Die zumindest eine an einem Rotationskörper angeordnete Messsonde umfasst ein Sensorelement und zumindest eine dem Sensorelement zugeordnete Aufsetzkalotte. Zum Auslesen der Messwerte kann eine Sende- und Empfangseinrichtung zur drahtlosen Datenübertragung an eine Auswerteeinrichtung an dem Rotationskörper vorgesehen sein. Diese kann als eine serielle Schnittstelle oder als USB Schnittstelle ausgebildet sein.

Aus der Veröffentlichung MAXIM: "USB 2.0 Full-Speed Transceiver with UART Multiplexing Mode", 1. März 2006, XP002432696 geht eine Schnittstelle hervor, die sowohl durch ein USB-Kommunikationsprotokoll als auch durch ein UART-Kommunikationsprotokoll nutzbar ist. Die Umschaltung zwischen der jeweiligen Konfiguration hängt dabei davon ab, ob an dem VBUS-Pin eine Spannung anliegt.

Aus der US 2016/188 514 A ist ein USB-Controller bekannt, durch welchen Daten in ein damit verbundenes USB-Kabel übertragen werden, wobei eine Pull-Down Schaltung einen Strom von einem Versorgungsmodus absenkt, sobald die übertragenen Daten in einen ersten Zustand übergeführt sind, und ein Versorgungsmodus nicht abgesenkt wird, sofern die übertragenen Datensignale in einem zum ersten Zustand verschiedenen zweiten Zustand sind.

Aus der CN 101937414 A ist eine Vorrichtung mit einer Micro-USB-Schnittstelle bekannt, welche einen Wechsel zwischen einem UART-Kommunikationsprotokoll und einem USB-Kommunikationsprotokoll ermöglicht. Dafür ist jeweils zumindest ein UART-Transceiver und getrennt dazu ein USB-Transceiver vorgesehen.

Aus der CN 202694335 U ist eine Schaltung bekannt, welche zwei Eingänge D+ und D- für unterschiedliche Signale umfasst, die direkt zum CPU-Modul führen. In Abhängigkeit der Eingangsspannung wird unmittelbar ein USB-Kommunikationsprotokoll oder ein UART-Kommunikationsprotokoll an das CPU-Modul übertragen.

Aus der EP 1 806 661 A1 ist eine Audiovorrichtung bekannt, die eine Kommunikationsschnittstelle aufweist. Die Kommunikationsschnittstelle wird hinsichtlich von logisch Hoch-/Niedrig-Zuständen zweier Datenkontakte ausgewertet, um den von einem angeschlossenen externen Gerät genutzten Kommunikationsstandard zu ermitteln. Dazu werden diese Datenkontakte mit Referenzspannungen verglichen, um zu bestimmen, ob an dem jeweiligen Datenkontakt ein logisch Hoch oder Niedrig vorliegt. Basierend auf dem Ergebnis dieser Analyse kann die Kommunikationsschnittstelle entsprechend dem USB- und dem UART-Kommunikationsprotokoll konfiguriert werden, um Audio-Dateien übertragen zu können. Die Bestimmung des Kommunikationsprotokolls beruht somit aber auf einer relativ komplexen Auswertung, da gleich zwei Kontakte hinsichtlich ihrer Spannungsamplituden analysiert werden müssen und diese zudem jeweils mit Referenzwerten verglichen werden müssen.

Der Erfindung liegt die Aufgabe zugrunde, eine Messsonde, insbesondere zur taktilen Messung auf einer Oberfläche von Gegenständen, bereitzustellen, welche eine flexible Übertragung von Messdaten bei einem geringen Energieverbrauch ermöglicht.

Die Aufgabe wird erfindungsgemäß durch den Gegenstand des unabhängigen Anspruchs gelöst. Weitere vorteilhafte Ausgestaltungen und Weiterbildungen sind in den abhängigen Ansprüchen angegeben.

Es wird eine Messsonde bereitgestellt, welche eine Schaltung mit zumindest einem Mikrocontroller und zumindest einem Multiplexer umfasst, die mit zumindest einer Kommunikationsschnittstelle verbunden sind. Daten sind durch die Schaltung mittels zumindest zwei voneinander abweichenden Kommunikationsprotokollen über die gemeinsame Kommunikationsschnittstelle übertragbar. Aufgrund der unterschiedlichen Kommunikationsprotokolle kann eine Abwägung zwischen einer modularen Flexibilität und einem niedrigen Energieverbrauch erfolgen. Somit kann die Messsonde beispielsweise über die Kommunikationsschnittstelle an mobile Geräte, PCs oder dergleichen angeschlossen werden sowie eine einfache Anbindung an industrielle Schnittstellen ermöglichen.

Die Kommunikationsschnittstelle ist eine USB-C Schnittstelle. Die USB-C Schnittstelle ist heutzutage weit verbreitet und wird für verschiedenste Anwendungsfälle eingesetzt. Zudem kann die USB-C Schnittstelle nicht nur gemäß dem USB-Kommunikationsprotokoll, sondern auch gemäß dem UART- Kommunikationsprotokoll, verwendet werden.

Die Kommunikationsschnittstelle weist zumindest einen ersten Spannungskontakt und zumindest zwei Datenkontakte auf. Der Multiplexer ist mit der Kommunikationsschnittstelle und dem Mikrocontroller gekoppelt. Der Multiplexer ist in Abhängigkeit von zumindest einer an dem zumindest ersten Spannungskontakt anliegenden ersten Spannungsamplitude entsprechend zumindest einem ersten Kommunikationsprotokoll und einem zweiten Kommunikationsprotokoll konfigurierbar. Insbesondere ist der Multiplexer in Abhängigkeit von zumindest der ersten Spannungsamplitude derart konfigurierbar, dass Daten mittels der zumindest zwei Datenkontakte basierend auf dem konfigurierten Kommunikationsprotokoll vom Mikrocontroller an eine externe Vorrichtung übertragbar sind. Diese Messsonde ermöglicht, den Erkennungsmechanismus des zu verwendenden Kommunikationsprotokolls zu vereinfachen.

Die Messsonde umfasst ferner zumindest einen USB-to-Serial-Konverter. Der Multiplexer kann dann entsprechend zumindest dem ersten und dem zweiten Kommunikationsprotokoll entweder auf Basis des Mikrocontrollers alleine oder auf Basis des Mikrocontrollers und des USB-to-Serial-Konverters konfigurierbar sein. Im ersten Fall kann der Mikrocontroller eingerichtet sein, Daten entsprechend zweier verschiedener Kommunikationsprotokolle für den Multiplexer bereitzustellen. Dann wird ein USB-to-Serial-Konverter nicht benötigt und kann entfallen. Im zweiten Fall kann der Mikrocontroller derart sein, dass er die Datenübermittlung nur gemäß einem Kommunikationsprotokoll ermöglicht. Der USB-to-Serial-Konverter kann die Datenübermittlung gemäß dem zweiten Kommunikationsprotokoll ermöglichen. Dazu kann der USB-to-Serial-Konverter insbesondere mit dem Mikrocontroller und dem Multiplexer gekoppelt sein. Der Mikrocontroller kann in diesem Fall Daten entsprechend dem ersten Kommunikationsprotokoll an den USB-to-Serial-Konverter übermitteln, wo sie derart konvertiert werden können, dass sie gemäß dem zweiten Kommunikationsprotokoll vorliegen. Vom USB-to-Serial-Konverter können die Daten dann an den Multiplexer übermittelt werden, um sie schlussendlich zur Übermittlung anhand der Kommunikationsschnittstelle entsprechend dem zweiten Kommunikationsprotokoll zur Verfügung zu stellen. Der Vorteil liegt darin, dass der Mikrocontroller einfacher ausgebildet sein kann. Der Mikrocontroller muss nur ein Kommunikationsprotokoll beherrschen.

Nach einer bevorzugten Ausgestaltung kann die Messsonde auch einen Low-Dropout-Regler umfassen. Der Low-Dropout-Regler kann mit der Kommunikationsschnittstelle gekoppelt sein. Der Low-Dropout-Regler ermöglicht, eine von der Kommunikationsschnittstelle empfangene Eingangsspannung zu glätten und eine Ausgangsspannung als Versorgungsspannung für den Mikrocontroller und/oder den Multiplexer bereitzustellen. Unter einem Low-Dropout-Regler kann insbesondere ein Linearregler verstanden werden. Für die Funktionsweise des Mikrocontrollers und/oder des Multiplexers kann eine stabile Versorgungsspannung von hoher Bedeutung sein. Eine an der Kommunikationsschnittstelle von einer externen Vorrichtung bereitgestellte Spannung kann zur Ansteuerung des Multiplexers verwendet werden. Liegt eine Spannung von z. B. 3,2 V bis 4,3 V an, wird der Mikroprozessor angesprochen und der Multiplexer arbeitet weiter mit einem ersten Kommunikationsprotokoll (Default), vorzugsweise mit dem UART-Kommunikationsprotokoll. Liegt eine Spannung von größer 4,3 V, insbesondere von 5 V, an, wird der USB-to-Serial-Konverter, optional zusätzlich, mit Spannung versorgt und es erfolgt eine Umschaltung auf das zweite Kommunikationsprotokoll, insbesondere das USB-Kommunikationsprotokoll.

Des Weiteren ist bevorzugt vorgesehen, dass die Eingangsspannung des Low-Dropout-Reglers nur auf der am ersten Spannungskontakt der Kommunikationsschnittstelle anliegenden Spannung beruhen kann. Das bedeutet, dass die am ersten Spannungskontakt anliegende Spannung nicht nur das Kommunikationsprotokoll bestimmt, mittels dem die Daten über die Kommunikationsschnittstelle übertragbar sind, sondern dass dieselbe Spannung auch zur Spannungsversorgung des Mikrocontrollers und/oder des Multiplexers genutzt wird. Dies kann beispielsweise anhand einer Parallelschaltung ermöglicht werden. Vorteilhaft werden keine zusätzlichen Kontakte der Kommunikationsschnittstelle benötigt, um die Versorgungsspannung bereitzustellen.

Alternativ kann die Kommunikationsschnittstelle zumindest einen zweiten Spannungskontakt umfassen. Dann kann die Eingangsspannung des Low-Dropout-Reglers auf der am zweiten Spannungskontakt der Kommunikationsschnittstelle anliegenden Spannung beruhen. Dadurch wird die der Versorgungsspannung zugrundeliegende Spannung von der die das Kommunikationsprotokoll bestimmenden Spannung getrennt. Das kann dazu führen, dass die der Versorgungsspannung zugrundeliegenden Spannung von vornherein mit weniger Störungen behaftet ist. Somit können die Anforderungen, die an den Low-Dropout-Regler gestellt werden, geringer sein, so dass eine einfachere und kostengünstigere Komponente verwendbar sein kann.

Eine weitere bevorzugte Ausgestaltung sieht vor, dass der Mikrocontroller zumindest einen Spannungsmesser umfasst oder mit einem solchen gekoppelt ist. Dann kann die an dem zumindest ersten Spannungskontakt anliegende erste Spannungsamplitude einem Wert nach bestimmbar sein. Der entsprechende Messwert der Spannungsamplitude kann dann vom Mikrocontroller genutzt werden, um zu bestimmen, basierend auf welchem Kommunikationsprotokoll die Datenübertragung konfiguriert werden soll.

Weiter bevorzugt kann die Messsonde einen Spannungsteiler umfassen. Ein Eingang des Spannungsteilers kann mit dem zumindest ersten Spannungskontakt elektrisch gekoppelt sein. Der Spannungsmesser kann dann mit einer vom Spannungsteiler ausgegebenen Spannung beaufschlagt werden. Diese Ausgestaltung ist insbesondere vorteilhaft, wenn die am ersten Spannungskontakt der Kommunikationsschnittstelle anliegende Spannung sowohl für die Bestimmung des Kommunikationsprotokolls als auch für die Spannungsversorgung des Mikrocontrollers und/oder des Multiplexers genutzt wird. Der Spannungsteiler kann dann in einer Parallelschaltung angeordnet sein. Der Spannungsteiler stellt eine effiziente Realisierungsmöglichkeit dar, eine entsprechende Prüfspannung bereitzustellen, die direkt von der Spannung des ersten Spannungskontakts abhängt.

Nach einer weiteren bevorzugten Ausgestaltung kann der Multiplexer entsprechend dem ersten Kommunikationsprotokoll konfiguriert werden, sofern die an dem ersten Spannungskontakt anliegende Spannungsamplitude einen ersten vorbestimmten Schwellwert nicht überschreitet. Sollte der Schwellwert überschritten werden, kann der Multiplexer dann entsprechend dem zweiten Kommunikationsprotokoll konfiguriert werden. Der Schwellwert stellt eine sehr effiziente Möglichkeit dar, zwischen den bestimmenden Spannungsamplituden zu unterscheiden. Das bedeutet zudem, dass ein Standardzustand des zu verwendenden Kommunikationsprotokolls basierend auf dem Schwellwert sehr effizient bestimmt sein kann. Denn, wenn überhaupt keine Spannung an dem ersten Spannungskontakt anliegt, wird der Schwellwert nicht überschritten. Also stellt das erste Kommunikationsprotokoll den Standardzustand des zu verwendenden Kommunikationsprotokolls dar. Die Änderung der Konfiguration des Multiplexers kann von einem bereitzustellen Stellsignal abhängen. Das Stellsignal kann insbesondere davon abhängen, ob die am ersten Spannungskontakt anliegende Spannungsamplitude den vorbestimmten Schwellwert überschreitet. Sobald dies geschieht, kann der Multiplexer mittels des Stellsignals entsprechend dem zweiten Kommunikationsprotokolls konfiguriert werden. Fällt die Spannungsamplitude unter den Schwellwert zurück, kann sich die Konfiguration des Multiplexers abermals ändern, sodass er wieder zurückfällt und entsprechend dem ersten Kommunikationsprotokolls konfiguriert wird. Bezüglich des Schwellwerts kann eine Hysterese vorgesehen sein, um einen schnellen Wechsel zwischen den Zuständen zu unterbinden.

Bevorzugt ist vorgesehen, dass die an dem zumindest ersten Spannungskontakt anliegende Spannungsamplitude durch eine externe Vorrichtung bereitgestellt wird. Dadurch wird vorteilhaft gewährleistet, dass das zu verwendende Kommunikationsprotokoll durch die an die Kommunikationsschnittstelle gekoppelte externe Vorrichtung bestimmt sein kann. Wenn man bedenkt, dass einzig die an dem ersten Spannungskontakt anliegende Spannungsamplitude das zu verwendende Kommunikationsprotokoll bestimmt, bedeutet dies, dass Vorrichtungen, die eine Datenkommunikation entsprechend dem ersten und zweiten Kommunikationsprotokoll erfordern, eine Spannung an demselben Spannungskontakt der Kommunikationsschnittstelle ausgeben. Dadurch wird die Ermittlung des zu verwendenden Kommunikationsprotokolls also in automatisierter Weise ermöglicht. Denn, egal nach welchen Kommunikationsprotokollen die externe Vorrichtung die Datenübertragung erfordert, kann dies jedenfalls basierend auf der an dem ersten Spannungskontakt anliegenden und von der externen Vorrichtung bereitgestellten Spannung bestimmt werden.

Gemäß einer Weiterbildung der Messsonde, kann die Schaltung derart ausgebildet sein, dass eine Versorgungsspannung für die Schaltung in dem Gehäuse ausschließlich über den ersten Spannungskontakt bereitgestellt werden, insbesondere von der externen Vorrichtung. Das bedeutet, dass die Versorgungsspannung für sämtliche Komponenten der Schaltung, also den Multiplexer, den Mikrocontroller und, optional, den Low-Dropout-Regler und den Serial-to-USB-Konverter ausschließlich von dem ersten Spannungskontakt bereitgestellt werden kann. Die Schaltung kann dann eine besonders geringe Komplexität aufweisen.

Ferner sieht eine bevorzugte Ausgestaltung vor, dass der Multiplexer ausschließlich abhängig von einer an dem ersten Spannungskontakt anliegenden Spannungsamplitude konfiguriert wird. Es kann also vermieden werden, Spannungsamplituden von zwei Spannungskontakten auswerten zu müssen, um den Multiplexer und, optional, den Mikrocontroller, entsprechend dem gewünschten Kommunikationsprotokoll zu konfigurieren.

Insbesondere kann zur Auswertung der an dem ersten Spannungskontakt anliegenden Spannungsamplitude ein Spannungsmesser damit gekoppelt sein. Der Spannungsmesser ist dann extern zum Mikrocontroller. Die Auswertung mehrerer Spannungsamplituden, die an mehreren unterschiedlichen Spannungskontakten anliegen, würde eine komplexere Schaltung im Gehäuse erforderlich machen. Beispielsweise wären dann mehrere Spannungsmesser erforderlich. Das würde aber nicht nur zu einer erhöhten Komplexität der Schaltung führen, sondern auch einen erhöhten Stromverbrauch verursachen. Folglich wäre die maximale Betriebsdauer einer Energiespeichervorrichtung reduziert, die zur Versorgung der Schaltung genutzt wird. Insbesondere bei mobilen Anwendungen der Messsonde würde eine Auswertung mehrerer Spannungskontakte hinsichtlich der jeweils anliegenden Spannungsamplitude zu begrenzten Laufzeiten beziehungsweise Betriebsdauer führen.

Eine an dem ersten Spannungskontakt anliegende Spanungsamplitude kann mithilfe eines Komparators ausgewertet werden, beispielsweise hinsichtlich zumindest eines Schwellwerts. Der Komparator kann also Teil des Spannungsmessers sein. Dadurch ist eine Vereinfachung in der Auswertung ermöglicht. Da der Multiplexer nur abhängig von einer Spannungsamplitude (der am ersten Spannungskontakt anliegenden) ausgewertet wird, kann auf zusätzliche Komparatoren verzichtet werden, was eine Energieverbrauchseinsparung ermöglicht und die Laufzeit in Abhängigkeit einer vorgegebenen Speicherkapazität einer Energiespeichervorrichtung verlängert.

Der Komparator kann dann die an dem ersten Spannungskontakt anliegende Spanungsamplitude hinsichtlich zumindest eines Schwellwerts auswerten. Ein Ausgangssignal des Komparators kann angeben, ob der Schwellwert unter- oder überschritten ist. Eine Hysterese kann vorgesehen sein, um schnelle Wechsel zu unterbinden. Insbesondere kann der Multiplexer und, optional, auch der Mikrocontroller in Abhängigkeit des Ausgangssignals des Spannungsmessers, hier des Komparators, gemäß entweder dem ersten oder dem zweiten Kommunikationsprotokoll konfiguriert werden.

Der erste Spannungskontakt kann insbesondere ein VBUS1-Kontakt der Kommunikationsschnittstelle sein, insbesondere der USB-C-Schnittstelle. Der VBUS1-Kontakt wird bei USB-C-Schnittstellen üblicherweise zur Bereitstellung einer Versorgungsspannung genutzt. Hier kann also die Schaltung der Messsonde gemäß dem Standard mittels des VBUS1-Kontakts mit einer Versorgungsspannung beaufschlagt werden. Derselbe Kontakt kann aber auch zur Identifikation des von der externen Vorrichtung benötigten Kommunikationsprotokolls ausgewertet werden. Gemäß dem Stand der Technik werden zur Schnittstellenkonfiguration andere Pins der USB-C-Schnittstelle genutzt, beispielsweise CC1 und CC2. Dadurch würde die Schaltung aber komplexer werden. Zudem müssten gemäß dem Stand der Technik mehrere Pins hinsichtlich der anliegenden Spannungsamplitude ausgewertet werden. Das ist hier nicht der Fall. Nur ein einzelner Pin, der VBUS1-Kontakt, stellt sowohl die Versorgungsspannung für die Schaltung der Messsonde als auch gleichzeitig die Information für das zu verwendende Kommunikationsprotokoll bereit (durch die anliegende Spannungsamplitude). Folglich ist die Komplexität der Schaltung reduziert und die Betriebsdauer erhöht.

In einer optionalen Ausgestaltung können der Spannungsmesser und der Low-Dropout-Regler bezüglich des ersten Spannungskontakts in einer Parallelschaltung angeordnet sein. Somit kann der erste Spannungskontakt besonders einfach sowohl zur Bereitstellung einer Versorgungsspannung als auch zur Identifikation des erforderlichen Kommunikationsprotokolls genutzt werden. Vorteilhaft wird die Versorgungsspannung dabei durch den Low-Dropout-Regler geglättet, wodurch die nachfolgend beaufschlagten Komponenten, beispielsweise der Mikrocontroller, mit weniger Störungen beaufschlagt werden.

Eine weitere bevorzugte Ausgestaltung sieht vor, dass das erste Kommunikationsprotokoll ein UART-Kommunikationsprotokoll ist und das zweite Kommunikationsprotokoll ein USB-Kommunikationsprotokoll ist. Diese Kommunikationsprotokolle ermöglichen weite Anwendungsbereiche der Messsonde. Das UART-Kommunikationsprotokoll wird typischerweise zur Realisierung digitaler serieller Schnittstellenkommunikation verwendet. Das USB-Kommunikationsprotokoll stellt ein serielles Kommunikationsprotokoll dar. Insbesondere stellen diese Kommunikationsprotokolle die Hauptanwendungsfälle mobiler Anwendungen dar.

Die Messsonde kann gemäß einer bevorzugten Ausgestaltung einen Messkopf mit einer Sensoranordnung zur Messung von Schichtdicken, von Korrosionsschutz, zur Material- und Werkstoffprüfung, zur Temperaturprüfung oder zur Oberflächenprüfung umfassen. Messdaten der Sensoranordnung können dann anhand zumindest dem ersten Kommunikationsprotokoll oder dem zweiten Kommunikationsprotokoll an eine externe Vorrichtung kommunizierbar sein. Derartige Messsonden werden beispielsweise eingesetzt, um Lackschichtdicken zu prüfen. Dies geschieht oftmals außerhalb von Fertigungsumgebungen im Feld, beispielsweise bei einem Flugzeug auf einem Rollfeld. Deshalb ist es besonders vorteilhaft, wenn die Messdaten einerseits von speziellen mobilen mit Akkumulatoren betriebenen Handgeräten und andererseits von beispielsweise herkömmlichen Computern, Tablets oder ähnlichen Geräten, die auch kabelgebunden mit Energie versorgt oder nur stationär betrieben werden, ausgelesen werden können. Die verschiedenen Geräte bedienen sich dabei oftmals unterschiedlicher Kommunikationsprotokolle, nämlich dem UART- oder dem USB-Kommunikationsprotokoll. Die vorliegende Messsonde ermöglicht deshalb, die entsprechenden Messdaten auf vielfältige Weise und für viele Anwendungsfälle zur externen Auswertung bereitzustellen. Insbesondere bei Akkumulator-betriebenen Anwendungsfällen ist die notwendige Auswertung lediglich eines einzelnen Spannungskontakts der Kommunikationsschnittstelle von Vorteil, da sie eine verlängerte Laufzeit der Vorrichtung ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine Darstellung der erfindungsgemäßen Messsonde mit deren Anschlussmöglichkeiten an weitere Kommunikationsmittel,
- Figur 2: eine vereinfachte schematische Darstellung der Messsonde gemäß einer Ausführungsform,
- Figur 3: eine vereinfachte schematische Darstellung der Messsonde gemäß einer weiteren Ausführungsform,
- Figur 4: eine vereinfachte schematische Darstellung der Messsonde gemäß einer weiteren Ausführungsform,
- Figur 5: eine vereinfachte schematische Darstellung der Messsonde gemäß einer weiteren Ausführungsform,
- Figur 6: eine vereinfachte schematische Darstellung der Messsonde gemäß einer weiteren Ausführungsform,
- Figur 7: eine vereinfachte schematische Darstellung der Messsonde gemäß einer weiteren Ausführungsform, und
- Figur 8: eine vereinfachte schematische Darstellung des Multiplexers.

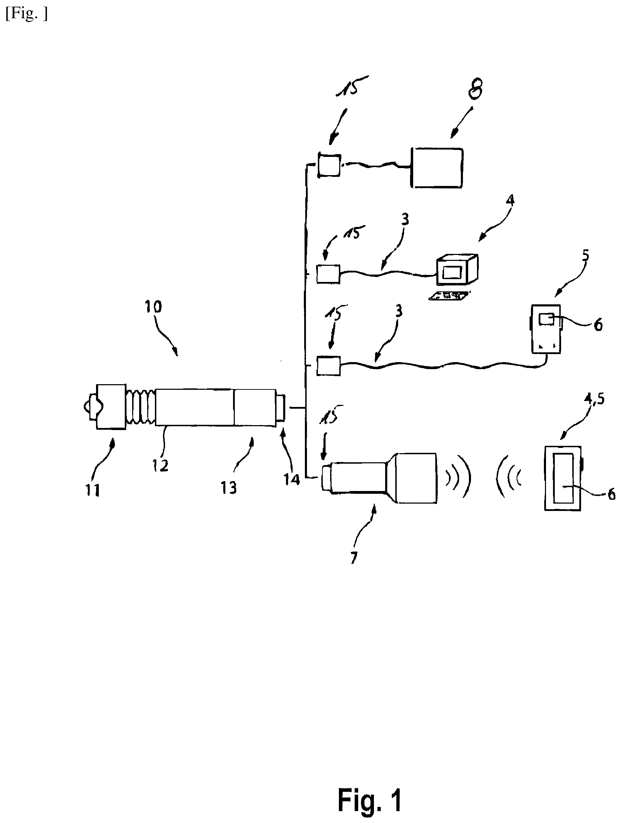

In Figur 1 ist schematisch vereinfacht eine Messsonde 10 dargestellt. Diese Messsonde 10 umfasst einen Messkopf 11, der an verschiedene Anwendungen und Aufgaben der Messsonde 10 angepasst ist. Dem Messkopf 11 gegenüberliegend ist an einem Gehäuse 12 der Messsonde 10 eine Schaltung 13 vorgesehen, die mit einer Kommunikationsschnittstelle 14 verbunden ist. Diese Kommunikationsschnittstelle 14 (Buchse) ist bevorzugt als eine USB-C-Schnittstelle ausgebildet und wird im Folgenden als solche beschrieben, jedoch ist diese Kommunikationsschnittstelle 14 darauf nicht beschränkt und kann andere Typen ebenfalls umfassen.

Diese Kommunikationsschnittstelle 14 dient beispielsweise zum Anschluss an ein Kabel 3 mit einer komplementären Kommunikationsschnittstelle 15, welches mit einer Datenverarbeitungseinrichtung 4 verbunden ist. Diese Datenverarbeitungseinrichtung 4 kann in Form eines stationären Computers, eines Terminals, eines Laptops aber auch ein mobiles Datenverarbeitungsgerät, wie beispielsweise ein Tablet, ein Handy oder dergleichen sein.

Des Weiteren kann die Messsonde 10 über die Kommunikationsschnittstelle 14 mit einem weiteren Kabel 3 verbunden werden, welches beispielsweise zu einem mobilen Handmessgerät 5 führt, welches zur Auswertung der durch die Messsonde 10 ermittelten Daten und beispielsweise zur Anzeige an einem Display 6 vorgesehen ist.

Darüber hinaus kann an die Kommunikationsschnittstelle 14 der Messsonde 10 ein Adapter 7 mit einer komplementären Kommunikationsschnittstelle 15 angeschlossen sein, welcher die durch die Messsonde 10 erfassten Daten verarbeitet und beispielsweise kabellos an eine weitere Datenverarbeitungseinrichtung 4, 5 übermittelt. Dabei können bekannte Techniken für die kabellose Datenübertragung, wie beispielsweise Bluetooth oder dergleichen, eingesetzt werden. Ein solcher Adapter 7 kann zusätzlich einen Akkumulator aufweisen, der insbesondere wiederaufladbar ist und vorzugsweise die Messsonde 10 mit Energie versorgt.

Darüber hinaus kann an die Kommunikationsstelle 14 der Messsonde 10 eine industrielle Schnittstelle 8 mit einer komplementären Schnittstelle angeschlossen sein. Diese industriellen Schnittstellen 8 weisen beispielsweise UART-Adapter oder RS485-Adapter auf.

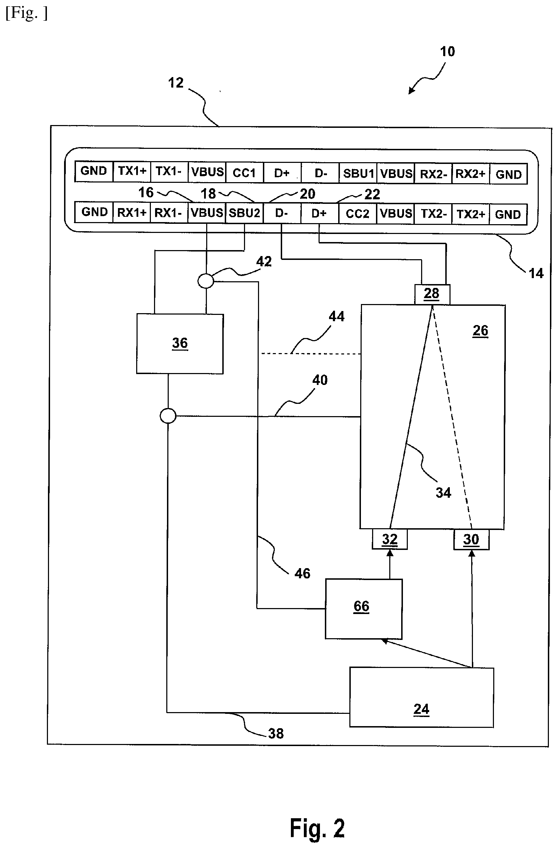

In Figur 2 ist die Schaltung 13 und die Kommunikationsschnittstelle 14 schematisch dargestellt.

Die Kommunikationsschnittstelle 14, welche im Folgenden als USB-C-Schnittstelle 14 bezeichnet wird, umfasst in bekannter Weise 24 Kontakte. Sobald die Kommunikation mittels der USB-C-Schnittstelle 14 entsprechend dem UART- oder USB-Kommunikationsprotokoll mit einer externen Vorrichtung 4, 5, 7 eingerichtet ist, können die 24 Kontakte in üblicher Weise genutzt werden. Vorliegend wird allerdings insbesondere auf vier Kontakte eingegangen, die für die Bestimmung des zu verwendenden Kommunikationsprotokolls und die Verwendung der Messsonde 10 von übergeordneter Bedeutung sind.

Das sind ein erster Spannungskontakt (VBUS) 16, ein zweiter Spannungskontakt (SUB2) 18, ein erster Datenkontakt (D-) 20 und ein zweiter Datenkontakt (D+) 22.

Die Schaltung 13 der Messsonde 10 umfasst zudem einen Mikrocontroller 24, einen Multiplexer 26, einen Low-Dropout-Regler 36 und einen USB-to-Serial-Konverter 66.

Der erste Spannungskontakt 16 ist mit dem Low-Dropout-Regler 36 gekoppelt. Entsprechend einer Parallelschaltung 42 ist der erste Spannungskontakt 16 auch anhand der Verbindungsleitung 46 mit dem USB-to-Serial-Konverter 66 gekoppelt. Der zweite Spannungskontakt 18 ist ebenfalls mit dem Low-Dropout-Regler 36 gekoppelt. Ein Ausgang des Low-Dropout-Reglers 36 ist anhand der Versorgungsleitungen 38, 40 mit dem Mikrocontroller 24 und dem Multiplexer 26 gekoppelt.

Gemäß der vorliegenden Ausführungsform wird an dem zweiten Spannungskontakt 18 durch die extern an die USB-C-Schnittstelle 14 angeschlossene Vorrichtung eine Versorgungsspannung bereitgestellt. Die Versorgungsspannung hat typischerweise eine Spannungsamplitude von 3,3 V. Um Störungen des Signals der Versorgungsspannung, die aus der extern angeschlossenen Vorrichtung resultieren können, auszugleichen oder zumindest zu reduzieren, wird die Versorgungsspannung durch den Low-Dropout-Regler 36 geglättet. Anschließend wird die Versorgungsspannung zur Spannungsversorgung des Mikrocontrollers 24 und des Multiplexers 26 bereitgestellt. Dadurch wird die einwandfreie Funktionsweise dieser Komponenten ermöglicht.

Der Multiplexer 26 umfasst einen Ausgang 28, einen ersten Eingang 30 und einen zweiten Eingang 32. Der Ausgang 28 des Multiplexers 26 ist mit dem ersten Datenkontakt 20 und dem zweiten Datenkontakt 22 gekoppelt. Der Multiplexer 26 ist eingerichtet, in Abhängigkeit von zumindest einem Stellsignal 44 entweder den ersten Eingang 30 oder den zweiten Eingang 32 mittels einer Schaltleitung 34 mit dem Ausgang 28 zu koppeln, um eine Datenübertragung mittels dem UART-Kommunikationsprotokoll (erstes Kommunikationsprotokoll) oder dem USB-Kommunikationsprotokoll (zweites Kommunikationsprotokoll) zu ermöglichen.

Der Mikrocontroller 24 ist mit dem ersten Eingang 30 des Multiplexers 26 und über den USB-to-Serial-Konverter 66 mit dem zweiten Eingang 32 gekoppelt. Gemäß der vorliegenden Ausführungsform ist der Mikrocontroller 24 eingerichtet, Daten nur entsprechend dem UART-Kommunikationsprotokoll bereitzustellen. Im Grundzustand des Multiplexers 26, ist der erste Eingang 30 mit dem Ausgang 28 gekoppelt. Das bedeutet, dass im Grundzustand eine Kommunikation basierend auf dem UART-Kommunikationsprotokoll ausgehend vom Mikrocontroller 24 ermöglicht wird.

In Abhängigkeit der an dem ersten Spannungskontakt 16 anliegenden Spannungsamplitude, die durch die extern angeschlossene Vorrichtung bereitgestellt wird, kann der Zustand des Multiplexers 26 durch das Stellsignal 44 geändert werden, um eine Kommunikation entsprechend dem USB-Kommunikationsprotokoll zu ermöglichen. Dazu wird überprüft, ob die an dem ersten Spannungskontakt 16 anliegende Spannungsamplitude einen Schwellwert überschreitet. Der Schwellwert liegt typischerweise bei 4,5 V. Das ist darin begründet, dass durch ein extern angeschlossenes Gerät, welches gemäß dem UART-Kommunikationsprotokoll betrieben wird, in der Regel lediglich Spannungen im Bereich von 3,5 V - 4,2 V bereitgestellt werden. Im Gegensatz dazu sind es bei Vorrichtungen, die gemäß dem USB-Kommunikationsprotokoll betrieben werden, Spannungsamplituden im Bereich von 4,5 V - 5,1 V.

Die Überprüfung der an dem ersten Spannungskontakt 16 anliegenden Spannungsamplitude kann anhand eines hier nicht dargestellten Spannungsmessers erfolgen. Alternativ könnte sie auch durch den Low-Dropout-Regler 36 erfolgen, soweit dieser mehrpolig ist. Ferner könnte die Schaltung auch so eingerichtet sein, dass der USB-to-Serial-Konverter 66 und der Multiplexer 26 zu jedem Zeitpunkt mit der an dem ersten Spannungskontakt 16 anliegenden Spannung beaufschlagt werden und ihre Funktionsweise nur dann ändern, wenn der Schwellwert überschritten wird. Im letztgenannten Fall wird das Stellsignal 44 in diesem Sinne durch den Multiplexer 26 selbst bereitgestellt.

In jedem Fall werden die Daten der Messsonde 10 entsprechend dem UART-Kommunikationsprotokoll vom Mikrocontroller 24 für den USB-to-Serial-Konverter 66 bereitgestellt. Der USB-to-Serial-Konverter 66 konvertiert die Daten und stellt sie am zweiten Eingang 32 des Multiplexers 26 bereit, sodass sie dort nicht mehr entsprechend dem UART-Kommunikationsprotokoll, sondern entsprechend dem USB-Kommunikationsprotokoll vorliegen. Da die Schaltleitung 34 des Multiplexers 26 in Abhängigkeit des Stellsignals 44 vom ersten Eingang 30 auf den zweiten Eingang 32 umgeschaltet wird, wird somit die Kommunikation entsprechend dem USB-Kommunikationsprotokoll ermöglicht, sobald der Schwellwert überschritten wird. Fällt die an dem ersten Spannungskontakt 16 anliegende Spannungsamplitude unter den Schwellwert zurück, wechselt der Multiplexer 26 in seinen Ausgangszustand, so dass der erste Eingang 30 mit dem Ausgang 28 entsprechend dem UART-Kommunikationsprotokoll gekoppelt ist.

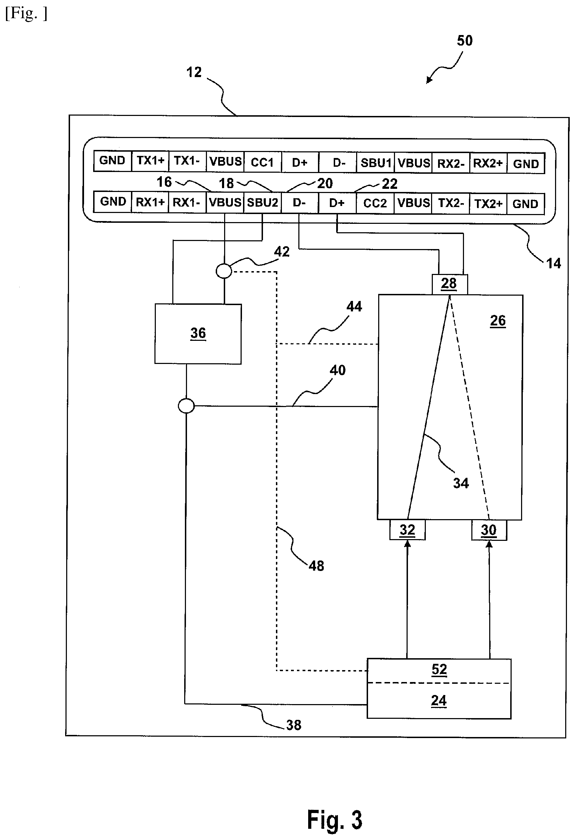

Figur 3 zeigt eine vereinfachte schematische Darstellung der Schaltung 13 mit der Kommunikationsschnittstelle 14 der Messsonde 50 gemäß einer weiteren Ausführungsform. Entsprechend der im Vorhinein beschriebenen Figur, sind gleiche Komponenten gleich benannt. Eine detaillierte Beschreibung wird bezüglich dieser Komponenten vermieden. Es wird hier lediglich auf die Unterschiede zur vorgenannten Figur 2 eingegangen.

Gemäß der vorliegenden Ausführungsform der Messsonde 50 ist der USB-to-Serial-Konverter entfallen. Seine Funktionalität wird vom Mikrocontroller 24 übernommen. Vorliegend weist der Mikrocontroller 24 einen Spannungsmesser 52 auf. Generell könnte der Spannungsmesser 52 auch extern zum Mikrocontroller 24 sein und lediglich mit diesem gekoppelt sein. Die am ersten Spannungskontakt 16 anliegende Spannung wird dem Spannungsmesser 52 anhand der Verbindungsleitung 48 zugeführt. Anhand des Spannungsmessers 52 ist der Mikrocontroller 24 eingerichtet, zu bestimmen, ob die Spannungsamplitude den Schwellwert überschreitet. Der Mikrocontroller 24 ist gemäß dieser Ausführungsform nicht nur eingerichtet, Daten entsprechend dem UART-Kommunikationsprotokoll für den ersten Eingang 30 des Multiplexers 26 bereitzustellen, sondern auch entsprechend dem USB-Kommunikationsprotokoll für den zweiten Eingang 32. Der Mikrocontroller 24 ist eingerichtet, auf Basis der detektierten Spannungsamplitude nicht nur zu entscheiden, anhand welchem Kommunikationsstandard die Daten für den Multiplexer 26 und an welchen Eingang diese bereitgestellt werden müssen, sondern stellt auch das entsprechende Stellsignal 44 für den Multiplexer 26 bereit. Basierend auf dem Stellsignal 44 wird der Multiplexer 26 für die Datenübertragung entsprechend konfiguriert. Auch gemäß der vorliegenden Ausführungsform weist der Multiplexer 26 einen Grundzustand auf, der lediglich unter der Bedingung des Überschreitens des Schwellwerts variiert wird.

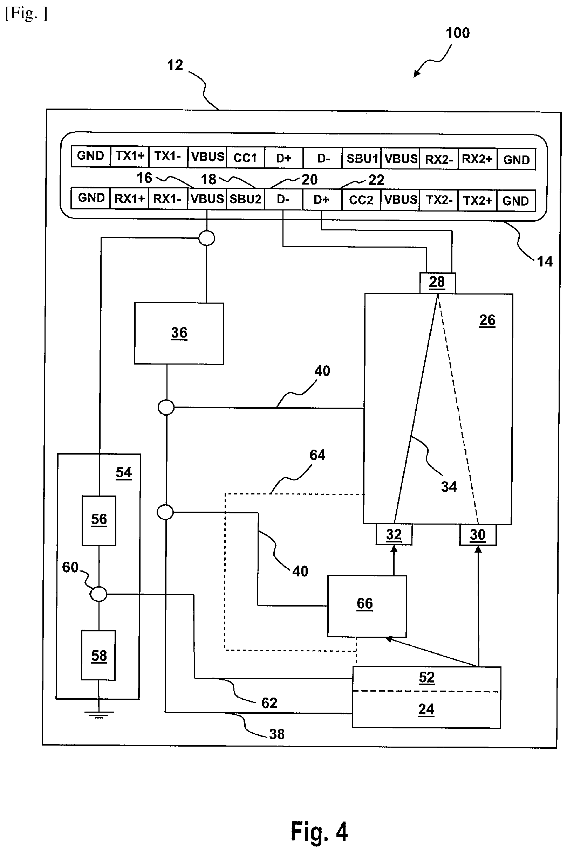

Figur 4 zeigt eine vereinfachte schematische Darstellung der Schaltung 13 mit der Kommunikationsschnittstelle 14 der Messsonde 100 gemäß einer weiteren Ausführungsform. Entsprechend der im Vorhinein beschriebenen Figuren, sind gleiche Komponenten gleich benannt. Eine detaillierte Beschreibung wird bezüglich dieser Komponenten vermieden. Es wird hier lediglich auf die Unterschiede zu den vorgenannten Figuren eingegangen.

Die Ausführungsform der Schaltung 13 der Messsonde 100 entspricht im Wesentlichen der Ausführungsform der Schaltung 13 der Messsonde 10. Jedoch wird eine Vereinfachung bereitgestellt. Die an dem ersten Spannungskontakt 16 anliegende Spannungsamplitude wird nicht nur zur Bestimmung des zu verwendenden Kommunikationsstandards benutzt, sondern auch zur Spannungsversorgung der Komponenten der Messsonde 100.

Die Messsonde 100 weist einen Spannungsteiler 54 auf. Der Spannungsteiler 54 weist zumindest zwei in Reihe geschaltete Widerstände 56, 58 und einen dazwischen angeordneten Mittelabgriff 60 auf. Der Mittelabgriff 60 ist mit dem Spannungsmesser 52 des Mikrocontrollers 24 anhand der Verbindungsleitung 62 gekoppelt. Um die Kommunikationsstandardbestimmung und die Bereitstellung der Versorgungsspannung gleichzeitig zu ermöglichen, sind der Low-Dropout-Regler 36 und der Spannungsteiler 54 entsprechend einer Parallelschaltung bezüglich des ersten Spannungskontakts 16 angeordnet. Der Spannungsteiler 54 stellt dann über den Mittelabgriff 60 eine Prüfspannung für den Spannungsmesser 52 bereit. Die Prüfspannung ist direkt proportional zu der an dem ersten Spannungskontakt 16 anliegenden Spannungsamplitude. Die Proportionalität ergibt sich aus den relativen Größen der Widerstände 56, 58. Die Prüfspannung ist in der Regel kleiner als die am ersten Spannungskontakt 16 anliegende Spannung. Demzufolge braucht der Spannungsmesser 52 nur für einen geringen Spannungsbereich ausgelegt sein.

Der Low-Dropout-Regler 36 glättet die ihm zugeführte Spannungsamplitude und stellt sie als Versorgungsspannung 38, 40 für die Komponenten der Messsonde 100 bereit. Der zweite Spannungskontakt 18 ist insofern gemäß dieser Ausführungsform unerheblich bzw. nicht erforderlich.

Auf Basis der von dem Spannungsmesser 52 bestimmten Spannungsamplitude relativ zum vorgegebenen Schwellwert, wird durch den Mikrocontroller 24 bei einer anliegenden Spannung von 4,5 V oder größer ein Stellsignal 64 für den USB-to-Serial-Konverter 66 und für den Multiplexer 26 bereitgestellt und diese entsprechend konfiguriert. In bekannter Weise werden die Daten (Messdaten einer Sensoranordnung der Messsonde 100) anstelle dem UART-Kommunikationsprotokoll vom Mikrocontroller 24 an dem ersten Eingang 30 des Multiplexers 26 über das USB-Kommunikationsprotokoll am zweiten Eingang 32 des Multiplexers 26 durch den USB-to-Serial-Konverter 66 bereitgestellt. Letzteres, nachdem der USB-to-Serial-Konverter 66 die Daten zuvor entsprechend dem UART-Kommunikationsprotokoll vom Mikrocontroller 24 erhalten hat und diese konvertiert hat.

Zusätzlich ist der Mikrocontroller 24 auch eingerichtet, ein Stellsignal für den USB-to-Serial-Konverter 66 bereitzustellen, um die Konvertierung und entsprechende Bereitstellung der Daten am zweiten Eingang 32 durch ihn auszulösen.

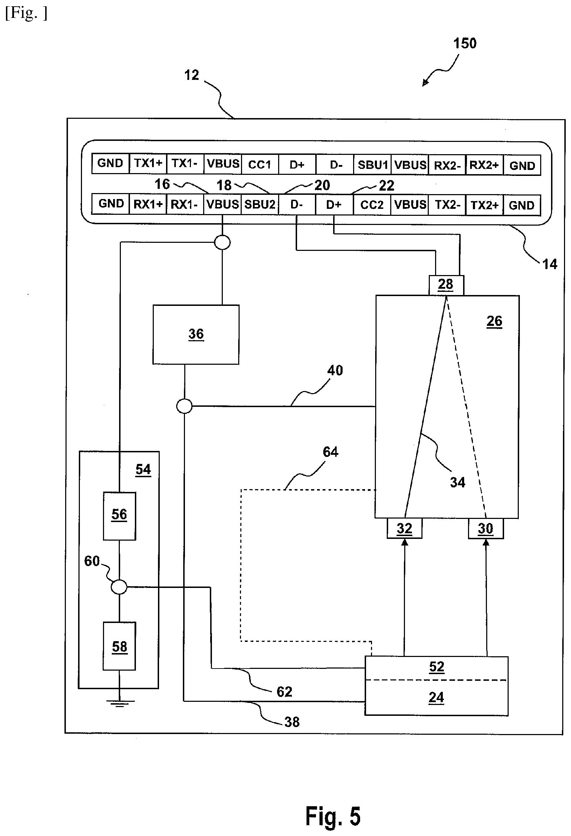

Figur 5 zeigt eine vereinfachte schematische Darstellung der Schaltung 13 mit der Kommunikationsschnittstelle 14 der Messsonde 150 gemäß einer weiteren Ausführungsform. Entsprechend der im Vorhinein beschriebenen Figuren, sind gleiche Komponenten gleich benannt. Eine detaillierte Beschreibung wird bezüglich dieser Komponenten vermieden. Es wird hier lediglich auf die Unterschiede zu den vorgenannten Figuren eingegangen.

Die Ausführungsform der Messsonde 150 entspricht im Wesentlichen der Ausführungsform der Messsonde 50. Jedoch wird wiederum die in Bezug auf die Messsonde 100 bereits beschriebene Vereinfachung bereitgestellt. Die an dem ersten Spannungskontakt 16 anliegende Spannungsamplitude wird nicht nur zur Bestimmung des zu verwendenden Kommunikationsstandards benutzt, sondern auch zur Spannungsversorgung der Komponenten der Messsonde 150.

Gemäß dieser Ausführungsform ist der USB-to-Serial-Konverter entfallen. Dafür ist der Mikrocontroller 24 eingerichtet, die Daten entsprechend beider Kommunikationsprotokolle entweder am ersten Eingang 30 oder am zweiten Eingang 32 des Multiplexers 26 bereitzustellen. Die Messsonde 150 umfasst ebenfalls einen Spannungsteiler 54, der in einer Parallelschaltung mit dem Low-Dropout-Regler 36 angeordnet ist. Der Spannungsteiler 54 stellt anhand des Mittelabgriffs 60 eine Prüfspannung für den Spannungsmesser 52 des Mikrocontrollers 24 bereit. Sofern ein Schwellwert von 4,5 V überschritten ist, wird ein Stellsignal 64 für den Multiplexer 26 vom Mikrocontroller 24 ausgegeben und das USB-Kommunikationsprotokoll angesteuert. Die Versorgungsspannung 38, 40 des Mikrocontrollers 24 und des Multiplexers 26 wird durch den Low-Dropout-Regler 36 bereitgestellt, wie bereits zuvor beschrieben.

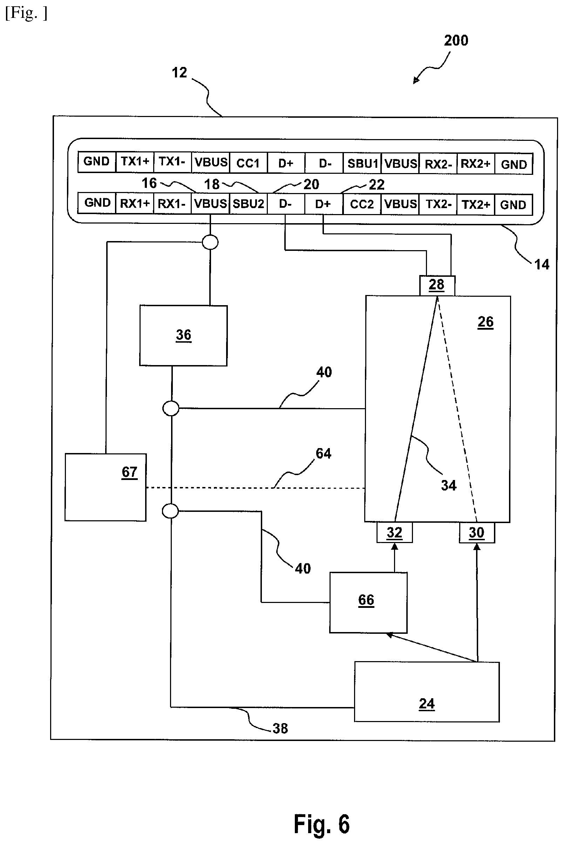

Figur 6 zeigt eine vereinfachte schematische Darstellung der Schaltung 13 mit der Kommunikationsschnittstelle 14 der Messsonde 200 gemäß einer weiteren Ausführungsform. Entsprechend der im Vorhinein beschriebenen Figuren, sind gleiche Komponenten gleich benannt, und es wird auf diese Beschreibung Bezug genommen. Nachfolgend wird auf die Unterschiede zu den vorgenannten Figuren 1 bis 5 eingegangen.

Separat zum Mikrocontroller 24 ist ein Spannungssensor 67 vorgesehen. Der Spannungsmesser 67 ist mit dem ersten Spannungskontakt (VBUS) 16 gekoppelt. Der Spannungsmesser 67 kann mit dem Low-Dropout-Regler 36 in einer Parallelschaltung bezüglich des ersten Spannungskontakts 16 angeordnet sein. Der erste Spannungskontakt 16 wird durch den Spannungsmesser 67 hinsichtlich der anliegenden Spannungsamplitude ausgewertet, beispielsweise mittels eines Komparators. In Abhängigkeit der anliegenden Spannungsamplitude wird der Multiplexer 26 durch den Spannungsmesser 67 mit dem Stellsignal 64 entsprechend dem ersten oder zweiten Kommunikationsprotokoll konfiguriert. Gleichzeitig wird durch den ersten Spannungskontakt 16 auch die Versorgungsspannung für die Komponenten der Schaltung 13 bereitgestellt, also für den Low-Dropout-Regler 36, den Multiplexer, 26, den USB-to-Serial-Konverter 66 und den Mikrocontroller 24.

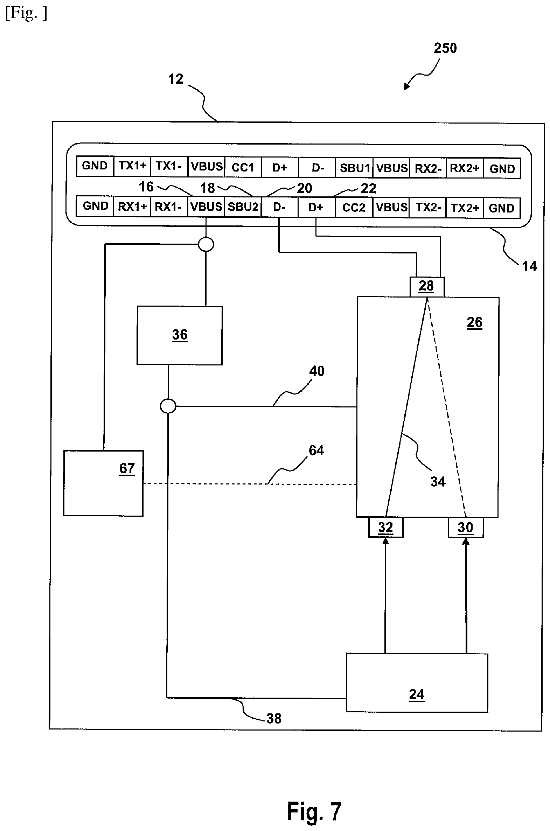

Figur 7 zeigt eine vereinfachte schematische Darstellung der Schaltung 13 mit der Kommunikationsschnittstelle 14 der Messsonde 250 gemäß einer weiteren Ausführungsform. Entsprechend der im Vorhinein beschriebenen Figuren, sind gleiche Komponenten gleich benannt, und es wird auf diese Beschreibung Bezug genommen. Nachfolgend wird auf die Unterschiede zu den vorgenannten Figuren 1 bis 6 eingegangen.

Figur 7 entspricht im Wesentlichen Figur 6, aber der Mikrocontroller 24 ist eingerichtet, die Daten sowohl entsprechend dem USB-Kommunikationsprotokoll als auch gemäß dem UART-Kommunikationsprotokoll bereitzustellen. Dennoch wird auch hier der einzelne erste Spannungskontakt (VBUS) 16 gleichzeitig zur Bereitstellung der Versorgungsspannung der Schaltung 13 als auch zur Bereitstellung der Information über das zu verwendende Kommunikationsprotokoll genutzt. Der Spannungsmesser 67 konfiguriert den Multiplexer 26 in entsprechender Weise, beispielsweise abhängig von den oben skizzierten Schwellwertbedingungen.

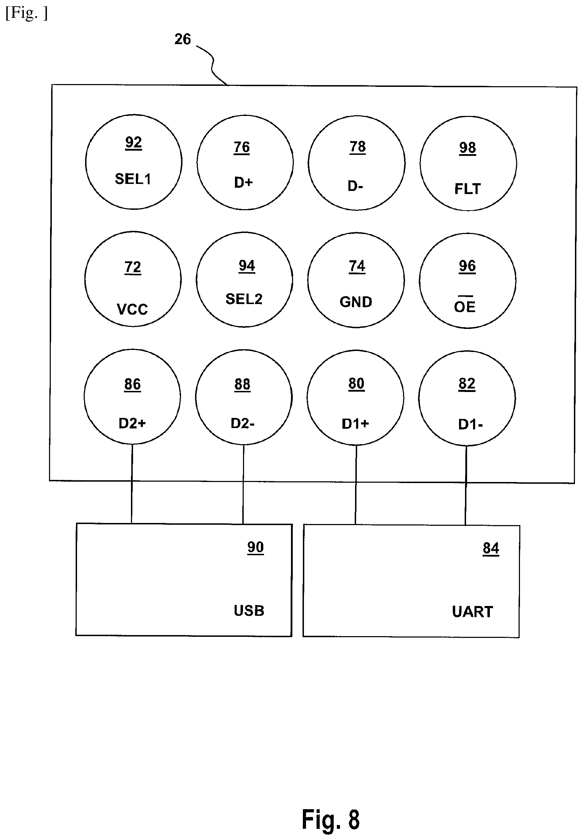

Figur 8 zeigt eine vereinfachte schematische Darstellung des Multiplexers 26. Der Multiplexer 26 weist im Wesentlichen zwölf Kontakte auf. Die Kontakte D+, D- 76, 78 stellen den Ausgang des Multiplexers 2 dar. Der erste Eingang wird durch die Kontakte D1+, D1- 80, 82 gebildet. Der zweite Eingang wird durch die Kontakte D2+, D2- 86, 88 gebildet. Die Kontakte des ersten Eingangs 80, 82 sind entsprechend dem UART-Kommunikationsprotokoll 84 gekoppelt. Die Kontakte des zweiten Eingangs 86, 88 sind entsprechend dem USB-Kommunikationsprotokoll 90 gekoppelt. Die Versorgungsspannung liegt am Spannungskontakt VCC 72 gegenüber dem Massekontakt GND 74 an. Der Freigabekontakt OE ("output enable") 96 kann optional adressiert werden und bestimmen, ob der Ausgang freigegeben wird oder nicht. Basierend auf den beiden Stellkontakten SEL1, SEL2, 92, 94 wird bestimmt, ob die Kontakte des ersten Eingangs 80, 82 oder die Kontakte des zweiten Eingangs 86, 88 mit den Kontakten des Ausgangs 76, 78 gekoppelt werden. Im Grundzustand des Multiplexers 26 sind die Kontakte 80, 82 des ersten Eingangs mit den Kontakten 76, 78 des Ausgangs gekoppelt. Insofern ist zwingend ein Stellsignal an den Stellkontakten SEL1, SEL2, 92, 94 notwendig, um die Konfigurierung des Multiplexer 26 zu ändern. Dies kann auf Basis von entsprechenden logisch Hoch-/Niedrig-Signalen erfolgen, mit denen die Stellkontakte SEL1, SEL2, 92, 94 beaufschlagt werden. Beispielsweise kann der Multiplexer 26 entsprechend dem UART-Kommunikationsprotokoll konfiguriert sein, wenn an beiden Stellkontakten SEL1, SEL2, 92, 94 logisch Niedrig anliegt, und entsprechend dem USB-Kommunikationsprotokoll, wenn an beiden Stellkontakten SEL1, SEL2, 92, 94 logisch Hoch anliegt. Das Stellsignal kann in beschriebener Weise beispielsweise durch den Mikrocontroller 24 oder den Spannungsmesser 67 bereitgestellt werden. Weiterhin ist ein Fehlerkontakt FLT 98 vorgesehen.

## Patentansprüche

1. Messsonde (10, 50, 100, 150, 200, 250), insbesondere zur taktilen Messung auf einer Oberfläche von Gegenständen, mit einem Gehäuse (12) und einem von dem Gehäuse (12) aufgenommenen Messkopf (11), wobei an dem Gehäuse (12) zumindest eine Kommunikationsschnittstelle (14) vorgesehen ist, die mit einer in dem Gehäuse (12) angeordneten Schaltung (13) kommuniziert, **dadurch gekennzeichnet, dass** die Schaltung zumindest einen Mikrocontroller (24) und zumindest einen Multiplexer (26) umfasst, wobei Daten durch die Schaltung (13) mittels zumindest zwei voneinander abweichender Kommunikationsprotokolle über eine gemeinsame Kommunikationsschnittstelle (14) übertragbar sind, wobei die Kommunikationsschnittstelle (14) eine USB-C Schnittstelle ist, wobei die Kommunikationsschnittstelle (14) zumindest einen ersten Spannungskontakt (16) und zumindest zwei Datenkontakte (20, 22) umfasst, wobei der Multiplexer (26) mit der Kommunikationsschnittstelle (14) und dem Mikrocontroller (24) gekoppelt ist, und wobei der Multiplexer (26) in Abhängigkeit von einer an dem zumindest einen ersten Spannungskontakt (16) anliegenden ersten Spannungsamplitude entsprechend zumindest einem ersten Kommunikationsprotokoll oder einem zweiten Kommunikationsprotokoll konfigurierbar ist, so dass Daten mittels der zumindest zwei Datenkontakte (20, 22) anhand des konfigurierten Kommunikationsprotokolls vom Mikrocontroller (24) an eine externe Vorrichtung (4, 5, 7) übertragbar sind, die über die Kommunikationsschnittstelle (14) anschließbar ist, wobei zumindest ein USB-to-Serial-Konverter (66) vorgesehen ist, wobei der Multiplexer (26) entsprechend zumindest dem ersten und dem zweiten Kommunikationsprotokoll entweder auf Basis des Mikrocontrollers (24) alleine oder auf Basis des Mikrocontrollers (24) und des USB-to-Serial-Konverters (66) konfigurierbar ist.

2. Messsonde (10, 50, 100, 150, 200, 250) nach Anspruch 1, **dadurch gekennzeichnet, dass** ein Low-Dropout-Regler (36) vorgesehen ist, wobei der Low-Dropout-Regler (36) mit der Kommunikationsschnittstelle gekoppelt ist, und wobei der Low-Dropout-Regler (36) angeordnet und eingerichtet ist, eine von der Kommunikationsschnittstelle empfangene Eingangsspannung zu glätten und eine Ausgangsspannung als Versorgungsspannung für den Mikrocontroller (24) und/oder den Multiplexer (26) bereitzustellen.

3. Messsonde (10, 50, 100, 150, 200, 250) nach Anspruch 2, **dadurch gekennzeichnet, dass** die Eingangsspannung des Low-Dropout-Reglers (36) auf der an dem ersten Spannungskontakt (16) der Kommunikationsschnittstelle anliegenden Spannung beruht.

4. Messsonde (10, 50, 100, 150, 200, 250) nach einem der vorherigen Ansprüche, **dadurch gekennzeichnet, dass** der Mikrocontroller (24) zumindest einen Spannungsmesser (52, 67) umfasst oder mit einem solchen gekoppelt ist, so dass die an dem zumindest ersten Spannungskontakt (16) anliegende erste Spannungsamplitude einem Wert nach bestimmbar ist.

5. Messsonde (10, 50, 100, 150, 200, 250) nach Anspruch 4, **dadurch gekennzeichnet, dass** ein Spannungsteiler (54) vorgesehen ist, wobei ein Eingang des Spannungsteilers (54) mit dem zumindest ersten Spannungskontakt (16) elektrisch gekoppelt ist, und dass der Spannungsmesser (52, 67) mit einer vom Spannungsteiler (54) ausgegebenen Spannung beaufschlagt wird.

6. Messsonde (10, 50, 100, 150, 200, 250) nach einem der vorherigen Ansprüche, **dadurch gekennzeichnet, dass** der Multiplexer (26) entsprechend dem ersten Kommunikationsprotokoll konfiguriert wird, sofern die an dem ersten Spannungskontakt (16) anliegende Spannungsamplitude einen ersten vorbestimmten Schwellwert nicht überschreitet, und wobei der Multiplexer (26) anderenfalls entsprechend dem zweiten Kommunikationsprotokoll konfiguriert wird.

7. Messsonde (10, 50, 100, 150, 200, 250) nach einem der vorherigen Ansprüche, **dadurch gekennzeichnet, dass** die an dem zumindest ersten Spannungskontakt (16) anliegende Spannungsamplitude durch die externe, an die Messsonde (10, 50, 100, 150) anschließbare Vorrichtung (4, 5, 7) bereitgestellt wird.

8. Messsonde (10, 50, 100, 150, 200, 250) nach einem der vorherigen Ansprüche, **dadurch gekennzeichnet, dass** die Schaltung (13) derart ausgebildet ist, dass eine Versorgungsspannung für die Schaltung (13) in dem Gehäuse (12) ausschließlich über den ersten Spannungskontakt (16) bereitgestellt wird, insbesondere von der externen Vorrichtung (4, 5, 7, 8).

9. Messsonde (10, 50, 100, 150, 200, 250) nach einem der vorherigen Ansprüche, **dadurch gekennzeichnet, dass** der Multiplexer (26) ausschließlich abhängig von einer an dem ersten Spannungskontakt (16) anliegenden Spannungsamplitude konfiguriert wird.

10. Messsonde (10, 50, 100, 150, 200, 250) nach einem der Ansprüche 4 bis 9, soweit zurückbezogen auf Anspruch 2, **dadurch gekennzeichnet, dass** der Spannungsmesser (52, 67) und der Low-Dropout-Regler (36) bezüglich des ersten Spannungskontakts (16) in einer Parallelschaltung angeordnet sind.

11. Messsonde (10, 50, 100, 150, 200, 250) nach einem der vorherigen Ansprüche, **dadurch gekennzeichnet, dass** der erste Spannungskontakt (16) ein VBUS1-Kontakt ist.

12. Messsonde (10, 50, 100, 150, 200, 250) nach einem der vorherigen Ansprüche, **dadurch gekennzeichnet, dass** das erste Kommunikationsprotokoll ein UART-Kommunikationsprotokoll (84) ist und das zweite Kommunikationsprotokoll ein USB-Kommunikationsprotokoll (90).

13. Messsonde (10, 50, 100, 150, 200, 250) nach einem der vorherigen Ansprüche, **dadurch gekennzeichnet, dass** die Messsonde (10, 50, 100, 150) eine Sensoranordnung zur Messung von Schichtdicken von Korrosionsschutz zur Material- und Werkstoffprüfung oder zur Oberflächenprüfung umfasst, wobei Messdaten der Sensoranordnung anhand zumindest dem ersten Kommunikationsprotokoll oder dem zweiten Kommunikationsprotokoll an eine externe Vorrichtung (4, 5, 7, 8) kommunizierbar sind.

14. Messsonde (10, 50, 100, 150, 200, 250) nach einem der vorhergehenden Ansprüche, **dadurch gekennzeichnet, dass** bei einer an der Kommunikationsschnittstelle (14) anliegenden und von einer externen Vorrichtung (4, 5, 7, 8) bereitgestellten Spannung von kleiner 4,3 V das erste Kommunikationsprotokoll ansteuerbar ist und bei einer bereitgestellten Spannung von größer 4,3 V eine Umschaltung auf das zweite Kommunikationsprotokoll, insbesondere USB-Kommunikationsprotokoll, vorgesehen ist.

## Claims

1. Measuring probe (10, 50, 100, 150, 200, 250), in particular for tactile measurement on a surface of objects, comprising a housing (12) and a measuring head (11) received by the housing (12), wherein at least one communication interface (14) is provided on the housing (12), which communicates with a circuit (13) arranged in the housing (12), **characterized in that** the circuit comprises at least one microcontroller (24) and at least one multiplexer (26), wherein data can be transmitted by the circuit (13) via a common communication interface (14) using at least two different communication protocols, wherein the communication interface (14) is a USB-C interface, wherein the communication interface (14) comprises at least one first voltage contact (16) and at least two data contacts (20, 22), wherein the multiplexer (26) is coupled to the communication interface (14) and the microcontroller (24), and wherein the multiplexer (26) is configurable, depending on a first voltage amplitude applied to the at least one first voltage contact (16), in accordance with at least a first communication protocol or a second communication protocol, such that data are transmitted via the at least two data contacts (20, 22) can be transmitted from the microcontroller (24) to an external device (4, 5, 7) that can be connected via the communication interface (14) based on the configured communication protocol, wherein at least one USB-to-serial converter (66) is provided, wherein the multiplexer (26) is configurable in accordance with at least the first and second communication protocols either based solely on the microcontroller (24) or based on the microcontroller (24) and the USB-to-serial converter (66).

2. Measuring probe (10, 50, 100, 150, 200, 250) according to claim 1, **characterized in that** a low-dropout regulator (36) is provided, wherein the low-dropout regulator (36) is coupled to the communication interface, and wherein the low-dropout regulator (36) is arranged and configured to smooth an input voltage received from the communication interface and to provide an output voltage as a supply voltage for the microcontroller (24) and/or the multiplexer (26).

3. Measuring probe (10, 50, 100, 150, 200, 250) according to claim 2, **characterized in that** the input voltage of the low-dropout regulator (36) is based on the voltage applied to the first voltage contact (16) of the communication interface.

4. Measuring probe (10, 50, 100, 150, 200, 250) according to one of the preceding claims, **characterized in that** the microcontroller (24) comprises at least one voltage meter (52, 67) or is coupled to such a device, so that the first voltage amplitude applied to the at least first voltage contact (16) can be determined to a certain value.

5. Measuring probe (10, 50, 100, 150, 200, 250) according to claim 4, **characterized in that** a voltage divider (54) is provided, wherein an input of the voltage divider (54) is electrically coupled to the at least first voltage contact (16), and **in that** the voltage meter (52, 67) is supplied with a voltage output by the voltage divider (54).

6. Measuring probe (10, 50, 100, 150, 200, 250) according to one of the preceding claims, **characterized in that** the multiplexer (26) is configured according to the first communication protocol provided that the voltage amplitude applied to the first voltage contact (16) does not exceed a first predetermined threshold value, and wherein the multiplexer (26) is otherwise configured according to the second communication protocol.

7. Measuring probe (10, 50, 100, 150, 200, 250) according to one of the preceding claims, **characterized in that** the voltage amplitude applied to the at least first voltage contact (16) is provided by the external device (4, 5, 7) connectable to the measuring probe (10, 50, 100, 150).

8. Measuring probe (10, 50, 100, 150, 200, 250) according to one of the preceding claims, **characterized in that** the circuit (13) is configured such that a supply voltage for the circuit (13) in the housing (12) is provided exclusively via the first voltage contact (16), in particular from the external device (4, 5, 7, 8).

9. Measuring probe (10, 50, 100, 150, 200, 250) according to one of the preceding claims, **characterized in that** the multiplexer (26) is configured exclusively in dependence on a voltage amplitude applied to the first voltage contact (16).

10. Measuring probe (10, 50, 100, 150, 200, 250) according to any one of claims 4 to 9, as referred back to claim 2, **characterized in that** the voltage meter (52, 67) and the low-dropout regulator (36) are arranged in a parallel circuit with respect to the first voltage contact (16).

11. Measuring probe (10, 50, 100, 150, 200, 250) according to any one of the preceding claims, **characterized in that** the first voltage contact (16) is a VBUS1 contact.

12. Measuring probe (10, 50, 100, 150, 200, 250) according to one of the preceding claims, **characterized in that** the first communication protocol is a UART communication protocol (84) and the second communication protocol is a USB communication protocol (90).

13. Measuring probe (10, 50, 100, 150, 200, 250) according to any one of the preceding claims, **characterized in that** the measuring probe (10, 50, 100, 150) comprises a sensor array for measuring the thickness of corrosion protection layers for material testing or surface inspection, wherein measurement data from the sensor array can be communicated to an external device (4, 5, 7, 8) using at least the first communication protocol or the second communication protocol.

14. Measuring probe (10, 50, 100, 150, 200, 250) according to one of the preceding claims, **characterized in that**, when a voltage of less than 4.3 V is applied to the communication interface (14) and supplied by an external device (4, 5, 7, 8) is less than 4.3 V, the first communication protocol can be activated, and when a supplied voltage is greater than 4.3 V, a switchover to the second communication protocol, in particular the USB communication protocol, is provided.

## Revendications

1. Sonde de mesure (10, 50, 100, 150, 200, 250), en particulier pour la mesure tactile sur une surface d'objets, comprenant un boîtier (12) et une tête de mesure (11) logée dans le boîtier (12), au moins une interface de communication (14) étant prévue sur le boîtier (12), laquelle communique avec un circuit (13) disposé dans le boîtier (12), **caractérisée en ce que** le circuit comprend au moins un microcontrôleur (24) et au moins un multiplexeur (26), les données pouvant être transmises par le circuit (13) au moyen d'au moins deux protocoles de communication différents via une interface de communication commune (14), l'interface de communication (14) étant une interface USB-C, l'interface de communication (14) comprenant au moins un premier contact de tension (16) et au moins deux contacts de données (20, 22), le multiplexeur (26) étant couplé à l'interface de communication (14) et au microcontrôleur (24), et le multiplexeur (26) pouvant être configuré, en fonction d'une première amplitude de tension appliquée au au moins un premier contact de tension (16), conformément à au moins un premier protocole de communication ou à un deuxième protocole de communication, de sorte que les données soient transmises au moyen des au moins deux contacts de données (20, 22) sur la base du protocole de communication configuré, du microcontrôleur (24) vers un dispositif externe (4, 5, 7) pouvant être connecté via l'interface de communication (14), dans lequel au moins un convertisseur USB-série (66) est prévu, le multiplexeur (26) pouvant être configuré, conformément au moins aux premier et deuxième protocoles de communication, soit sur la base du microcontrôleur (24) seul, soit sur la base du microcontrôleur (24) et du convertisseur USB-série (66).

2. Sonde de mesure (10, 50, 100, 150, 200, 250) selon la revendication 1, **caractérisée en ce qu'**un régulateur à faible chute de tension (36) est prévu, le régulateur à faible chute de tension (36) étant couplé à l'interface de communication, et dans laquelle le régulateur à faible chute de tension (36) est agencé et configuré pour lisser une tension d'entrée reçue par l'interface de communication et pour fournir une tension de sortie servant de tension d'alimentation pour le microcontrôleur (24) et/ou le multiplexeur (26).

3. Sonde de mesure (10, 50, 100, 150, 200, 250) selon la revendication 2, **caractérisée en ce que** la tension d'entrée du régulateur à faible chute de tension (36) repose sur la tension appliquée au premier contact de tension (16) de l'interface de communication.

4. Sonde de mesure (10, 50, 100, 150, 200, 250) selon l'une des revendications précédentes, **caractérisée en ce que** le microcontrôleur (24) comprend au moins un voltmètre (52, 67) ou est couplé à un tel, de sorte que la première amplitude de tension appliquée au moins premier contact de tension (16) peut être déterminée.

5. Sonde de mesure (10, 50, 100, 150, 200, 250) selon la revendication 4, **caractérisée en ce qu'**un diviseur de tension (54) est prévu, une entrée du diviseur de tension (54) étant couplée électriquement au moins premier contact de tension (16), et **en ce que** le voltmètre (52, 67) est alimenté par une tension délivrée par le diviseur de tension (54).

6. Sonde de mesure (10, 50, 100, 150, 200, 250) selon l'une des revendications précédentes, **caractérisée en ce que** le multiplexeur (26) est configuré selon le premier protocole de communication dès lors que l'amplitude de tension présente au niveau du premier contact de tension (16) ne dépasse pas une première valeur seuil prédéterminée, et dans le cas contraire, le multiplexeur (26) est configuré selon le deuxième protocole de communication.

7. Sonde de mesure (10, 50, 100, 150, 200, 250) selon l'une des revendications précédentes, **caractérisée en ce que** l'amplitude de tension appliquée au au moins premier contact de tension (16) est fournie par le dispositif externe (4, 5, 7) pouvant être raccordé à la sonde de mesure (10, 50, 100, 150).

8. Sonde de mesure (10, 50, 100, 150, 200, 250) selon l'une des revendications précédentes, **caractérisée en ce que** le circuit (13) est conçu de telle sorte qu'une tension d'alimentation pour le circuit (13) dans le boîtier (12) est fournie exclusivement par l'intermédiaire du premier contact de tension (16), en particulier par le dispositif externe (4, 5, 7, 8).

9. Sonde de mesure (10, 50, 100, 150, 200, 250) selon l'une des revendications précédentes, **caractérisée en ce que** le multiplexeur (26) est configuré exclusivement en fonction d'une amplitude de tension appliquée au premier contact de tension (16).

10. Sonde de mesure (10, 50, 100, 150, 200, 250) selon l'une des revendications 4 à 9, en référence à la revendication 2, **caractérisée en ce que** le voltmètre (52, 67) et le régulateur à faible chute de tension (36) sont disposés en parallèle par rapport au premier contact de tension (16).

11. Sonde de mesure (10, 50, 100, 150, 200, 250) selon l'une des revendications précédentes, **caractérisée en ce que** le premier contact de tension (16) est un contact VBUS1.

12. Sonde de mesure (10, 50, 100, 150, 200, 250) selon l'une des revendications précédentes, **caractérisée en ce que** le premier protocole de communication est un protocole de communication UART (84) et le deuxième protocole de communication est un protocole de communication USB (90).

13. Sonde de mesure (10, 50, 100, 150, 200, 250) selon l'une des revendications précédentes, **caractérisée en ce que** la sonde de mesure (10, 50, 100, 150) comprend un ensemble de capteurs destiné à mesurer l'épaisseur des couches de protection anticorrosion à des fins de contrôle des matériaux ou de contrôle de surface, les données de mesure de l'ensemble de capteurs pouvant être transmises à un dispositif externe (4, 5, 7, 8) au moyen d'au moins le premier protocole de communication ou le deuxième protocole de communication.

14. Sonde de mesure (10, 50, 100, 150, 200, 250) selon l'une des revendications précédentes, **caractérisée en ce que**, lorsque la tension appliquée à l'interface de communication (14) et fournie par un dispositif externe (4, 5, 7, 8) est inférieure à 4,3 V, le premier protocole de communication peut être activé et, lorsque la tension fournie est supérieure à 4,3 V, une commutation vers le deuxième protocole de communication, en particulier le protocole de communication USB, est prévue.
